# EUROPEAN PATENT APPLICATION

(11) **EP 4 163 142 A1**
(43) Date of publication of application: **12.04.2023**
(21) Application number: 21816962.1
(22) Date of filing: 25.05.2021
(51) Int. Cl.: B60K 35/00, G09G 5/00, G09G 5/36, G01D 7/00, G01D 7/06, G02B 27/01

(54) **VEHICULAR DISPLAY DEVICE AND DISPLAY METHOD**

(30) Priority: 05.06.2020 JP 2020098087
(71) Applicant: KOITO MANUFACTURING CO., LTD., Minato-ku, Tokyo, 108-8711 (JP)
(72) Inventor: TOYOSHIMA, Takanobu, Shizuoka-shi, Shizuoka 424-8764 (JP)
(74) Representative: Zimmermann, Tankred Klaus
(86) International application number: PCT/JP2021/019716
(87) International publication number: WO 2021/246234

(57) **Abstract**

There are provided: a vehicle display device including a HUD device capable of ensuring safe traveling by suitably controlling a display region of an image to be displayed on the windshield of a vehicle; and a display method. A vehicle display device includes a HUD device that projects image light of an image, which is to be displayed, on a windshield WS of a vehicle such that a virtual image I * of the image is visually recognized by reflected light. The vehicle display device is operable to display a plurality of images having a priority order, and an image having a high priority order is displayed such that an image displayed in a specified region As of the windshield WS has a predetermined display rate (= an area of the image / an area of the specified region) or less. Warning images I2 and I31 to I34 are set in a priority order higher than that of the driving support images I11 to 113.

## Description

### TECHNICAL FIELD

The present invention relates to a display device equipped on a vehicle, such as an automobile, and more specifically to a vehicle display device including a head-up display device (in the following, a HUD device) and a display method for a vehicle display device.

### BACKGROUND ART

As the HUD device, there is proposed a device in which light forming an image is projected onto a windshield (also referred to as a windshield) of an automobile such that an occupant such as a driver can visually recognize a virtual image of the image with the reflected light. Note that making a virtual image visible is also referred to as displaying an image. In Patent Literature 1, a HUD device is proposed in which light of an image displayed on a display unit such as a liquid crystal panel (in the following, referred to as "image light") is sequentially reflected off a plane mirror and a concave mirror and projected onto the windshield of an automobile to make the virtual image visible.

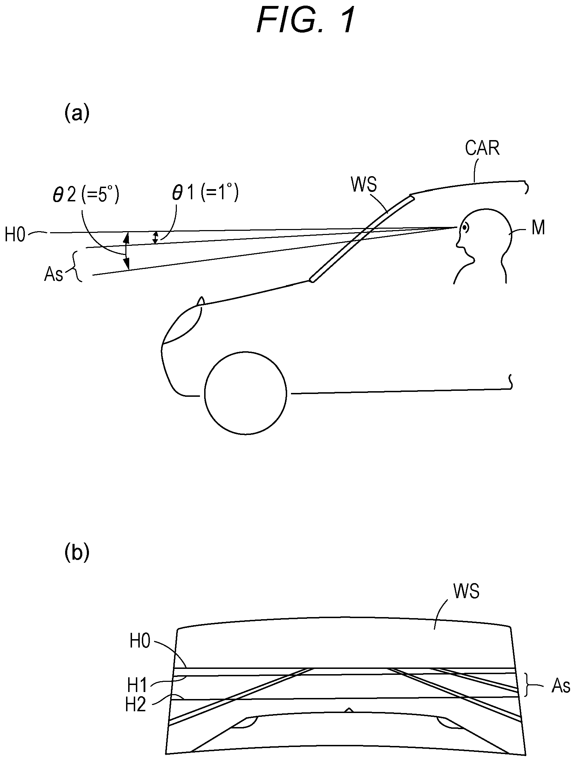

In this type of HUD device, it is necessary to ensure that the image displayed on the windshield does not obstruct the field of view of the region in front of the automobile and impede safety confirmation, and preferably, the display range of the image to be displayed is limited to a predetermined region. That is, as in (a) a side view and (b) a front view schematically shown in Fig. 1, when an occupant (driver) M of an automobile checks a front region through a windshield WS, an image is allowed to be displayed in a region below a line H1 having a depression angle (an angle below a horizontal line) of 1 ° to a horizontal line H0. However, a region (in the following, referred to as an S area) As between the line H1 having the depression angle of 1 ° and a line H2 having a depression angle of 5 ° is an important region for ensuring safety by visually recognizing a preceding vehicle and an oncoming vehicle, and it is preferable to limit a ratio of the display area of an image in regard to this S area As.

### CITATION LIST

### PATENT LITERATURE

Patent Literature 1: JP-A-2019-202708

### SUMMARY OF INVENTION

### PROBLEMS TO BE SOLVED BY INVENTION

Since the technique in Patent Literature 1 is configured to make the concave mirror of the HUD device tiltable and the image to be displayed movable, it seems possible to adjust the display region of the image in the S area by controlling the moving position of the image to be displayed. However, the HUD device has to be equipped with a mechanism to move the concave mirror, which makes the HUD device large and expensive. In addition, it is also conceivable to stop display of a part of the image in order to reduce the display region. However, this may make it difficult to ensure safety when the display of important images is stopped.

Moreover, in addition to HUD devices, recent automobiles may be provided with a display device to alert the occupants by displaying images in the front region of the automobile through the windshield. When images are displayed in the S-area by this display device, the display region of the image displayed by the HUD device is reduced by that amount. In the technique of Patent Literature 1, it is difficult to cope with such a change in the display region, and safe traveling of the vehicle may be impeded.

An object of the present invention is to provide a vehicle display device including a HUD device capable of ensuring safe traveling by suitably controlling the display region of an image to be displayed on the windshield of a vehicle, and a display method for this type of vehicle display device.

### SOLUTION TO PROBLEMS

As a feature of the present invention, there is provided a vehicle display device including a HUD device that projects image light of an image, which is to be displayed, on a windshield of a vehicle such that a virtual image of the image is visually recognized by light reflected off the windshield,
in which the vehicle display device is operable to display a plurality of images having a priority order, and
an image having a high priority order is displayed such that an image displayed in a specified region of the windshield has a predetermined display rate or less. In the present invention, the display rate is a ratio of an area of the specified region to an area of the image displayed in the region. In addition, the specified region is a region necessary for an occupant to ensure safe traveling of the vehicle. For example, the specified region is substantially an entire region of the windshield in a vehicle width direction in regard to a horizontal direction, and in regard to a vertical direction, the specified region is a region in which a viewing angle of the occupant of the vehicle is in a range of a depression angle of 1 ° to 5 ° to the horizontal direction.

As a preferred aspect of the vehicle display device of the present invention, the HUD device includes a first HUD device that displays a first image freely selected and set, and a second HUD device that displays a preset second image. Furthermore, preferably, the vehicle display device includes a third display device that displays point light as a third image that indexes an object. Here, preferably, the first image is an image used for driving support, the second image and the third image are images used for warning, and the second image and the third image are set in a priority order higher than a priority order of the first image.

As a feature of the present invention, there is provided a display method for projecting, on a windshield of a vehicle, image light of an image to be displayed, such that a virtual image of the image is visually recognized by light reflected off the windshield, the display method including: giving a priority order to a plurality of images to be displayed; and
displaying an image having a high priority such that an image displayed in a specified region of the windshield has a predetermined display rate or less.

### EFFECTS OF INVENTION

According to the present invention, since an image to be displayed on the windshield of a vehicle is displayed in order of an image having a higher priority order, it is possible to suitably control a display region necessary for safe traveling and it is possible to obtain a vehicle display device capable of ensuring a field of view necessary for safe traveling on the windshield. In addition, display suitable for safe traveling is performed.

### BRIEF DESCRIPTION OF DRAWINGS

Fig. 1 shows schematic diagrams illustrating an S area in an automobile, in which (a) is a side view and b) is a front view of a windshield;
Fig. 2 is a conceptual configuration diagram of a vehicle display device according to an embodiment.
Fig. 3 shows conceptual configuration diagrams of main parts of first to third display devices;
Fig. 4 shows diagrams illustrating an image display unit of the first HUD device, in which (a) is a plan view and (b) is an enlarged cross-sectional view taken along line b-b;
Fig. 5 is a diagram illustrating an example of first to third images, priority orders, and display rates of the first to third images;
Fig. 6 is a flowchart that illustrates a flow of a display method;
Fig. 7 shows front views showing a display example in the display method; and
Fig. 8 is a schematic perspective view of a modification example of the vehicle display device.

### BEST MODE OF CARRYING OUT INVENTION

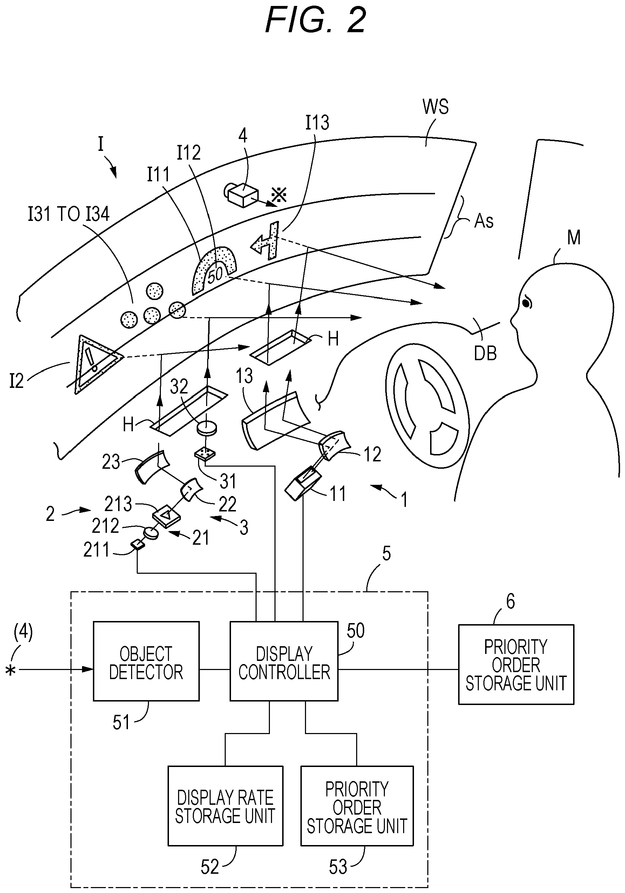

Next, an embodiment of the present invention will be described with reference to the drawings. Fig. 2 is a conceptual configuration diagram of a vehicle display device of the present invention applied to an automobile. In a dashboard DB of an automobile, a first HUD device 1 as a first display device, a second HUD device 2 as a second display device, and a point lamp 3 as a third display device are arranged. Image light L emitted from the first to third display devices 1 to 3 is projected onto a windshield WS of the automobile through an upper surface opening H of the dashboard DB. The projected image light L is reflected off the windshield WS and directed to an occupant M such as a driver of the automobile. When the image light L enters the eyes of the occupant M, the occupant M can visually recognize a virtual image I by the image light through the windshield WS at the front position of the automobile, and the image is displayed by the virtual image I.

In this example, as a first image displayed on the first HUD device 1, a speed scale image I11 and a speed number image I12 for driving support and a navigation image I13 for guiding a travel destination similarly for driving support are displayed side by side in a left-right direction. As a second image displayed on the second HUD device 2, a warning mark I2 of a fixed image set in advance in a predetermined shape is displayed in order to give a warning to an occupant when an object such as another vehicle, a pedestrian, or an obstacle exists in the front region of the automobile. As a third image displayed by the point lamp 3, when there is an object existing in the front region of the automobile, four point marks I31 to I34 that warn about the presence of the object and simultaneously index the presence position of the object are displayed.

Here, the occupant M visually recognizes the front region of the vehicle through the windshield WS, and as shown in Fig. 1, the first HUD device 1 can display the first image in substantially the entire region in a vehicle width direction in regard to the horizontal direction of the windshield WS, and in regard to the vertical direction, in a region below a line H1 having a depression angle of 1 ° to a horizontal line H0. In addition, with the provision of the second HUD device 2 and the point lamp 3 described above, these devices can also display the second image and the third image in the lower region.

In this embodiment, in the windshield WS, in the region below the line H1 having the depression angle of 1 °, the region up to the line H2 having a depression angle of 5 ° is specifically important for visually recognizing the preceding vehicle and the oncoming vehicle, and is set as an S area As, as shown in Fig. 1. The ratio (in the following, referred to as a display rate: display rate (%) = total image area / area of S area) of the total image area of the first to third images displayed in the S area As to the total area of the S area As is limited to 20% or less.

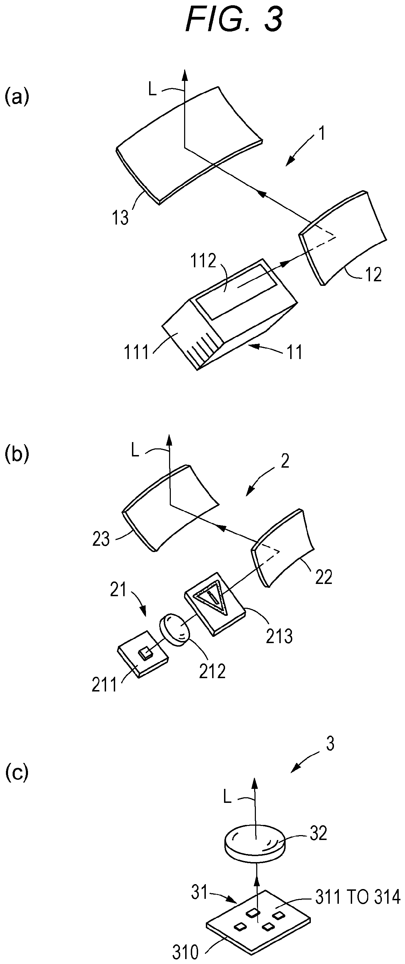

Fig. 3 is a schematic configuration diagram of the first HUD device 1, the second HUD device 2, and the point lamp 3 of the vehicle display device. The first HUD device 1 includes an image display unit 11 having a liquid crystal panel as a display panel that forms an image as shown in Fig. 3(a). In addition, the first HUD device 1 includes: a first reflector 12 that reflects the image light L of the image displayed on the image display unit 11; and a second reflector 13 that further reflects the light reflected off the first reflection 12 and projects the light onto the windshield WS. The first reflector 12 is formed of a convex mirror, and the second reflector 13 is formed of a concave mirror.

The concave mirror 13 is formed of a spherical surface or an aspherical surface having a curvature that achieves a necessary focal length. The convex mirror 12 is provided to improve aberration in the concave mirror 31 and to substantially extend the focal length of the concave mirror 13. A configuration is provided in which the image displayed in the image display unit 11 is disposed within the focal length of the concave mirror 13, and thus the occupant M can visually recognize the virtual image I of the image.

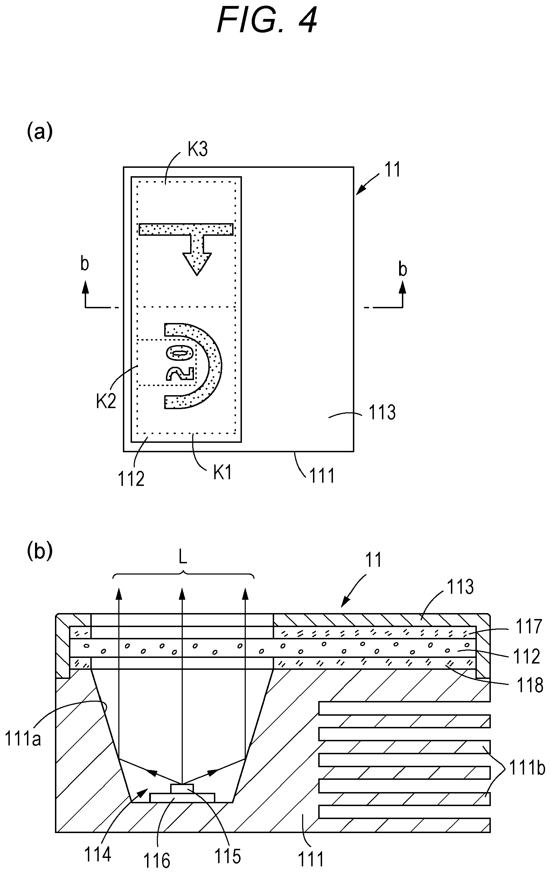

Fig. 4(a) is a plan view of the image display unit 11, and Fig. 4(b) is a cross-sectional view taken along line b-b. The image display unit 11 includes a case 111 formed of a member having a high thermal conductivity, and a transmissive liquid crystal panel 112 is placed on the upper surface of the case 111 and is supported by a cover 113 through heat transfer sheets 117 and 118. In the case 111, a light source chamber 111a in which a region corresponding to the liquid crystal panel 112 is recessed downward from the upper surface is formed, and a backlight source 114 is arranged on the inner bottom surface of the light source chamber 111a. The cover 113 and the heat transfer sheets 117 and 118 each have a window opened corresponding to the light source chamber 111a.

The backlight source 114 is formed of a circuit board 116 on which a light emitting diode (LED) 115 is mounted, and white light emitted when the LED 115 emits light is projected onto the back surface side of the liquid crystal panel 112. The inner wall surface of the light source chamber 111a is inclined so as to spread from the LED 115 toward the liquid crystal panel 112, and the white light of the LED 115 is reflected off the inner wall surface and directed toward the liquid crystal panel 112. The white light projected onto the liquid crystal panel 112 is transmitted through the liquid crystal panel 112 and emitted as image light L having a necessary hue.

On the outer wall surface of the case 111, a plurality of heat dissipation fins 111b is formed, and heat generated in the LEDs 115 and heat generated in the liquid crystal panel 112 are dissipated through the heat dissipation fins 111b. In general, in a HUD device having a large display magnification of a display image, the density of light of the display image decreases. Therefore, it is necessary to use an LED having a high luminous intensity, and heat generation in the LED increases. Accordingly, the heat generated by the light absorbing action in the liquid crystal panel 112 also increases.

In the image display unit 11, when the liquid crystal panel 112 is driven, a predetermined image is displayed in a necessary region of the liquid crystal panel 112 as shown in Fig. 4(a). Here, the speed scale image, the speed number image, and the navigation image are displayed side by side corresponding to the images I11, I12, and I13 shown in Fig. 1. At the same time, the LED 115 emits light, and the white light emitted from the LED 115 is applied to the liquid crystal panel 112 as a backlight. As a result, the light transmitted through the displayed image, i.e., the image light L is emitted from the liquid crystal panel 112, and the image light L is projected onto the windshield WS by the convex mirror 12 and the concave mirror 13 and reflected into the eyes of the occupant M, and the speed scale image I11, the speed number image I12, and the navigation image I13 are displayed as described above.

As shown in Fig. 3(b), the second HUD device 2 includes an image display unit 21, a first reflector 22, and a second reflector 23, similarly to the first HUD device 1. The configurations of the first reflector 22 and the second reflector 23 are the same as those of the first HUD device 1. However, the configuration of the image display unit 21 is different. The image display unit 21 includes an LED 211 as a light source, a condenser lens 212 that makes light emitted from the LED 211 substantially parallel light, and a mask 213 that shields a part of the parallel light to form a necessary light pattern. Here, the warning mark I2 is formed as the light pattern. Therefore, the mask 213 is formed with the same light-transmitting pattern as the warning mark I2 on a part of the non-light-transmitting surface.

In the second HUD device 2, when the LED 211 emits light, the image light L of the warning mark I2, which is an image corresponding to the pattern of the mask 213, is emitted from the image display unit 21. As a result, the image light L is projected onto the windshield WS by the convex mirror 22 and the concave mirror 23, and reflected, and enters the eyes of the occupant M, and then the warning mark I2 is displayed as described above.

In the present embodiment, the first HUD device 1 and the second HUD device 2 are configured independently of each other. However, the convex mirrors 12 and 22 as the first reflectors and the concave mirrors 13 and 23 as the second reflectors may be respectively configured as one convex mirror and one concave mirror which are shared by the first HUD device 1 and the second HUD device 2. That is, the image display units 11 and 21 may be disposed side by side in the left-right direction, and the image light L emitted from the image display units 11 and 21 may be reflected off the common convex mirror and concave mirror and projected onto the windshield WS.

As shown in Fig. 3(c), the point lamp 3 includes: a light source 31; and a projection lens 32 that projects light emitted from the light source 31, onto the windshield WS as point light having a necessary diameter size. By visually recognizing the point light projected onto the windshield WS as an index, the occupant can easily confirm an object existing in the front region of the automobile ahead of the line of sight. Here, in the light source 31, a plurality of (four) LEDs 311 to 314 is mounted on a substrate 310 in a necessary disposition, and the light emission of the LEDs 311 to 314 is independently controlled. Therefore, when the LEDs 311 to 314 emit light, the above-described point marks I31 to I34 are displayed at positions corresponding to the LEDs 311 to 314 on the windshield WS.

As shown in Fig. 2, the vehicle display device further includes a camera 4 arranged on an upper portion of the windshield WS in the vehicle interior of the automobile. The camera 4 can capture an image of the front region of the automobile, and can specifically capture an image of an object such as a preceding vehicle, an oncoming vehicle, or an obstacle present in the front region.

The first HUD device 1, the second HUD device 2, the point lamp 3, and the camera 4 described above are connected to a display control device 5 as shown in Fig. 2. The display control device 5 includes an object detector 51 that detects an object such as another vehicle or a falling object present in the front region from an image captured by the camera 4. In addition, the display control device 5 includes a display controller 50 that controls display operation in the first HUD device 1, the second HUD device 2, and the point lamp 3. Furthermore, the display control device 5 is connected with a setting unit 6 capable of selecting and setting an image to be displayed and a priority order by manual operation of the occupant M or by an ECU disposed outside the display device 5, for example.

The display controller 50 stores a plurality of images in advance, and has a function of causing the first HUD device 1 to display an image selected and set by setting in the setting unit 6. In addition, the point lamp 3 has a function of controlling display on the second HUD device 2 and the point lamp 3 corresponding to the object detected by the object detector 51. Furthermore, the display controller 50 is connected to a display rate storage unit 52 and a priority order storage unit 53, the display rate storing initial values unique to the vehicle, current display rates, and display rates related to images displayed by the first HUD device 1, the second HUD device 2, and the point lamp 3, the priority order storage unit 53 storing priority orders of such images.

The display rate storage unit 52 stores the display rates of a pasting type antenna and the manufacturing mark of the windshield WS in the S area, the display rates of the speed scale image I11, the speed number image I12, and the navigation image I13 displayed by the first HUD device 1, the display rate of the warning mark I2 displayed by the second HUD device 2, and the display rates of four point marks I31 to I34 displayed by the point lamp 3. Since the display position and the display area of these images and the like in the windshield WS are set in advance, the area of these images and the like in the S area As is fixed, and thus, from this area, each display rate can be calculated and stored in advance.

Note that since the image displayed on the first HUD device 1 is changed by settings, the display area of an image actually displayed is calculated based on the image displayed on the liquid crystal panel 112, and from the display area, the display rate is calculated and stored. For example, by detecting the number of pixels forming the image displayed on the liquid crystal panel 112, i.e., the number of pixels in the light-emitting state, the display area in the S area As of the image is obtained. Therefore, the display rate is calculated from the ratio of the display area to the area of the S area As.

Alternatively, as shown in Fig. 4(a), the display surface may be divided into a plurality of sections corresponding to a plurality of images displayed on the liquid crystal panel 112, here, three sections K1 to K3 divided by broken lines, and the area in the S area As may be obtained from the respective number of pixels of the divided sections K1 to K3. In this case, when a section corresponding to the displayed image is detected, the display area of the image can be obtained, and the display rate can be calculated.

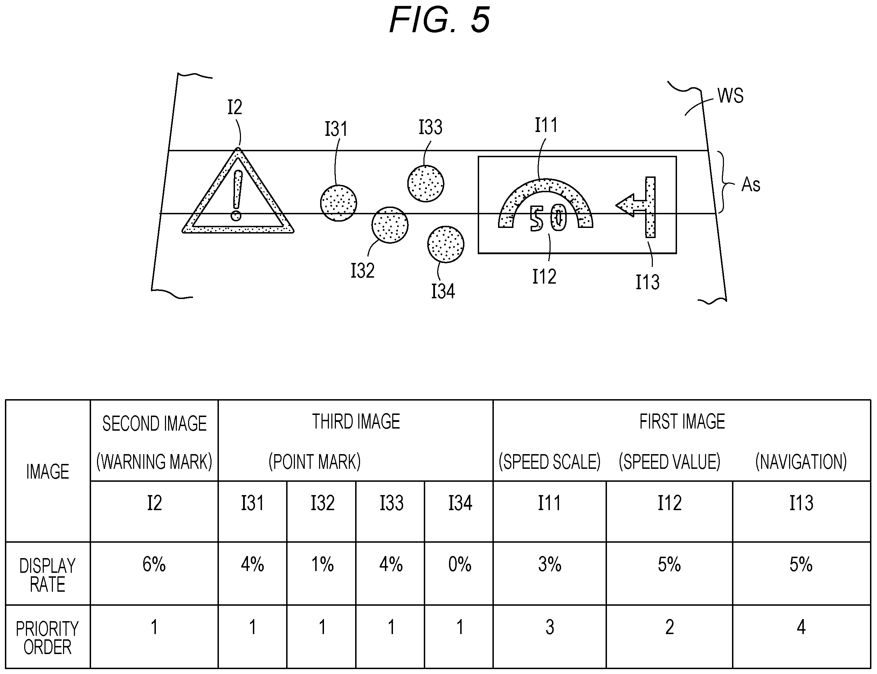

Fig. 5 shows examples of images to be displayed and display rates of the images. The image of the first HUD device 1 has a maximum display rate of 25%. The display rate of the speed scale image I11 displayed here is 5%, the display rate of the speed number image I12 is 3%, and the display rate of the navigation image I13 is 5%. The display rate of the warning mark I2 of the second HUD device 2 is 6%. Among the four point marks I31 to I34 of the point lamp 3, the point marks I31 and I33 are 4%, the point mark I32 is 1%, and the point mark I34 is 0%.

The priority order storage unit 53 stores the priority order of the images set by the setting unit 6. As the priority orders of the images, the priority orders of the warning mark I2 and the four point marks I31 to I34 are stored as "1" that is the highest priority order. On the other hand, the image of the first HUD device 1 has a low priority order, and is set and stored as "2" to "4" that are low priority orders in the order of the speed number image, the speed scale image, and the navigation image.

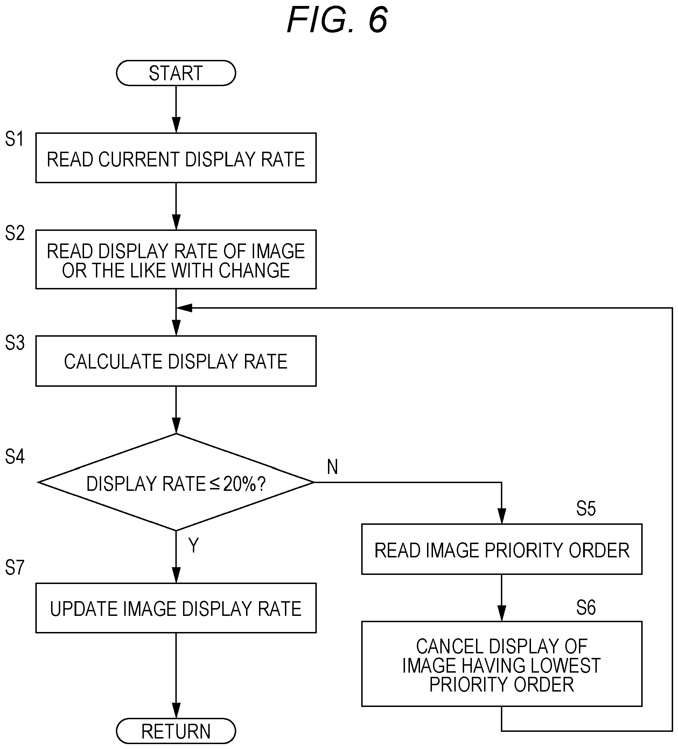

A display method for the vehicle display device having the above configuration will be described with reference to the flowchart of Fig. 6. The occupant M reads the current display rate in the setting unit 6 (S1). Furthermore, the display rate of an image or the like with a change is read (S2). Subsequently, the display controller 50 calculates the read display rate (S3). Furthermore, the display controller 50 determines whether or not the calculated display rate is 20% or less (S4). When the display rate exceeds 20%, the priority order stored in the priority order storage unit 53 is read (S5), and the display of the image having the lowest priority order is canceled (S6). In the case of 20% or less, Step S7 of maintaining the current display or updating the image display rate is executed.

For example, a first image to be displayed on the first HUD device 1 is set. The display controller 50 displays the set image on the liquid crystal panel 112 of the image display unit 11. At the same time, the LED 115 of the backlight source is caused to emit light. As a result, the image light L is emitted from the liquid crystal panel 112, and the image light L is reflected forward by the convex mirror 12, projected onto the concave mirror 13, further reflected, and projected onto the windshield WS of the automobile through the upper surface opening H of the dashboard DB.

As a result, the occupant M can visually recognize the virtual image of the image, and the first image is displayed by the first HUD device 1. When the first image is displayed, the display controller 50 performs control such that the display rate does not exceed 20%, and thus, all the set images, i.e., the speed scale image I11, the speed number image I12, and the navigation image I13 are displayed. Therefore, even when these images are displayed, a suitable viewing angle is ensured when the occupant M confirms the front region through the S area As.

In this display, the object detector 51 of the display control device 5 detects an object that may impede safe traveling in the front region, based on the image captured by the camera 4. When this object is detected, the display controller 50 controls the second HUD device 2 to display the warning mark I2 as the second image. With this display, the occupant M can easily confirm another vehicle, a pedestrian, an obstacle, and the like existing in the front region of the automobile, and safe traveling is ensured.

When the object is detected, the display controller 50 controls the point lamp 3 to display one or more of the point marks I31 to I34 as the third image at a position corresponding to the detected object or a position close to the detected object. By visually recognizing the displayed point mark, the occupant can confirm or easily confirm another vehicle, a pedestrian, an obstacle, and the like existing in the front region of the automobile through the windshield WS, and safe traveling is ensured.

On the other hand, when the second image and the third image are displayed, a part of the visually-recognized region of the S area As is obstructed, such that the field of view of the occupant M when confirming the front region through the S area As is limited. The display controller 50 calculates the display rates of all the displayed images. That is, the display controller 50 obtains the display rate of the second image when detecting that the second HUD device 2 is performing the display operation. In addition, when it is detected that any LED of the point lamp 3 is emitting light, the display rate of the LED is obtained. Then, the display rates of the second image and the third image are added to the display rate of the first image, and the display rate in the S area As is calculated for all the displayed images.

Next, the display controller 50 determines whether or not the calculated display rate is 20% or less. When the display rate exceeds 20%, reference is made to the priority order stored in the priority order storage unit 53, and the display of the image having the lowest priority is stopped. Then, the display of the second image or the third image is confirmed again, and when the display of the second image or the third image is changed, the flow from Step S4 is executed again. This display change can be confirmed from the operating state of the second HUD device 2 and the light emission states of the four LEDs of the point lamp 3. When the display rate of the second image or the third image increases, the display of the image having the second lowest priority order next to the previously stopped image is stopped (S5 to S7). As a result, the display rate of the image displayed in the S area As is prevented from exceeding 20%, and the safety confirmation by the occupant M through the S area As is ensured.

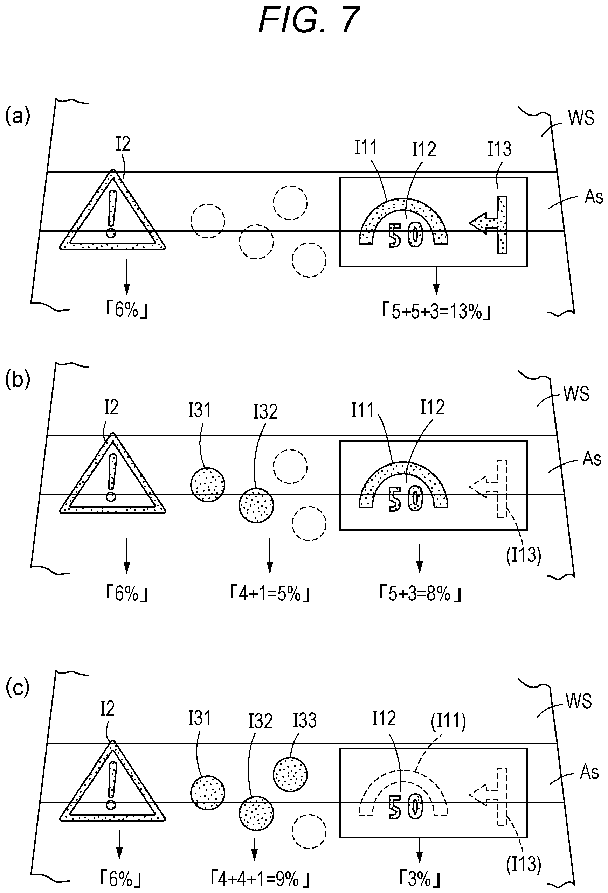

An example of this display control is shown in Fig. 7. Note that in Fig. 7, the displayed images are displayed in a filled manner. In Fig. 7(a), the first HUD device 1 displays the speed scale image I11, the speed number image I12, and the navigation image I13 as the first images. These display rates are 13% in total. In addition, the warning mark I2 having a display rate of 6% as the second image is displayed. Therefore, since the total display rate of these images is 19%, which is 20% or less, the display of these images is continued.

When the point marks I31 and I32, which are the third images, are displayed from this display state as shown in Fig. 7(b), the display rate 4% + 1% = 5% of these point marks is added, and thus the total display rate is 24%, which exceeds 20%. Therefore, the display controller 50 stops displaying the navigation image I13 having the lowest priority order. As a result, the display rate of 5% of the navigation image I3 is subtracted, and the total display rate becomes 19%, which is 20% or less, and thus this display is continued.

Furthermore, from this display state, when the display of the point mark that is the third image is changed and the point mark I33 is additionally displayed as shown in Fig. 7(c), the total display rate of the point marks to which these display rates are added is 9%. Therefore, the total display rate of all the images is 23%, which exceeds 20%. Therefore, the display controller 50 stops the display of the speed scale image I12 having the second lowest priority order. As a result, the total display rate becomes 18%, which is 20% or less, and thus this display is continued.

In this embodiment, priority is given to the display of the warning mark I2 and the point marks I31 to I34, which are highly necessary for ensuring safe traveling, and the speed scale image I11, the speed number image I12, and the navigation image I13, which function as driving support, are set to low priority. Therefore, while image display for ensuring visibility in the S area As is restricted, the display of an image useful for safe traveling is ensured.

In addition, the vehicle display device according to the embodiment does not have to include a mechanism that moves the concave mirror provided in the HUD device like Patent Literature 1, and can be configured at low cost without increasing the size of the HUD device. Furthermore, since the image to be displayed can be electrically and optically controlled, when a warning image is displayed corresponding to an object detected during traveling of the automobile, it is possible to quickly respond to this and ensure a viewing region, and safety is also ensured from this aspect.

In the present invention, in the case in which the first image displayed by the first HUD device as the first display device includes a plurality of images, the priority order of the plurality of images can be set by the occupant operating the setting unit. Therefore, even in the case in which the display of a part of the plurality of images is restricted as in the above-described embodiment, it is possible to ensure the display of images with the highest priority desired by the occupant.

The embodiment shows the hybrid display device including the second HUD device and the point lamp in addition to the first HUD device, these images being displayed in the S area. However, the present invention is also applicable to a vehicle display device that displays only an image by the first HUD device in the S area. In this case, a configuration may be provided in which display rates of a plurality of images displayed in the S area by the first HUD device are calculated, and when a total value of the display rates of these images exceeds a predetermined value, display of the plurality of images is sequentially stopped from an image having a lower priority order.

That is, in the example of the embodiment, since the maximum display rate of the image of the first HUD device in the S area is 25%, the total display rate may be 20% or more even in the case in which only these images are displayed. Therefore, the priority order among the plurality of displayed images is set, and the display is stopped from the image having the lower priority order. Then, the total of the display rates of the displayed images may be calculated, and control may be performed such that the display rate does not exceed 20%.

In addition, in the present invention, only one of the second HUD device and the point lamp may be provided in addition to the first HUD device. Furthermore, as described above, the second HUD device may be configured as a composite HUD device integrated with the first HUD device.

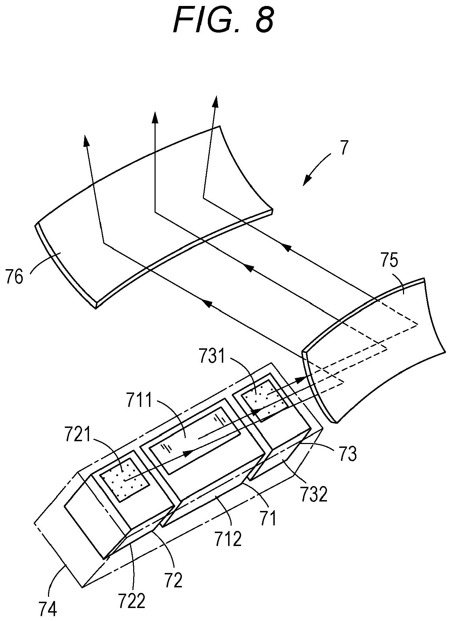

For example, as shown in a schematic configuration in Fig. 8, in a composite HUD device 7, a liquid crystal panel unit 71 as a first display device and two mask units 72 and 73 as a second display device are arranged side by side in the left-right direction in one housing 74. Here, the two mask units 72 and 73 are respectively arranged on both sides of the liquid crystal panel unit 71. In the liquid crystal panel unit 71, a liquid crystal panel 711 is arranged in a case 712, and an LED or the like, which is not shown in the drawing, is arranged in the case 712, similarly to the above-described embodiment. In the mask units 72 and 73, masks 721 and 731 are arranged in cases 722 and 732. In the cases 722 and 732, similarly to the embodiment, an LED and a condenser lens, which are not shown in the drawing, are arranged.

In this manner, the first display device 71 and the second display devices 72 and 73 are integrally formed, and thus a first reflector 75 and a second reflector 76, i.e., a convex mirror 75 and a concave mirror 76 are each formed as a reflector shared by one first display device 71 and two second display devices 72 and 73. As a result, even when a plurality of HUD devices having different forms is formed, the overall configuration can be simplified, which is advantageous for downsizing the vehicle display device.

Here, in the example of Fig. 8, one of the two second display devices 72 and 73, for example, the second display device 73 may be configured to display an image similar to the point mark. By such a configuration, the point lamp 3 of the embodiment, i.e., the third display device can be formed of the second display device 73, and the first to third display devices can be integrated for further downsizing.

The specified region (area) in the present invention is not limited to the S area described in the embodiment. The depression angle and the range in the vehicle width direction defining the S area can be appropriately set to different values according to the difference in the type of the automobile.

In the present invention, the image display unit of the first HUD device may be configured to emit image light corresponding to an image to be displayed. Therefore, the image display unit of the first HUD device may be configured with a DMD device in which micro mirrors are disposed in a matrix and light of a light source is selectively reflected to emit image light. Alternatively, the image display unit of the first HUD device may be configured with an organic EL. In addition, the display device that displays the warning image in the present invention is not limited to the HUD device or the point lamp, and may be a projector type display device.

The windshield in the present invention is not limited to the windshield of the automobile described in the embodiment, and may be a part of a vehicle body such as a translucent window provided in a vehicle.

The present international application claims priority based on Japanese Patent Application No. 2020-098087 filed on June 5, 2020, and the entire contents of Japanese Patent Application No. 2020-098087 are incorporated herein by reference.

The above description of the specific embodiments of the present invention is presented for the purpose of illustration. The embodiments are not intended to be exhaustive or to limit the invention as it is in the form described. It is obvious to those skilled in the art that many modifications and alterations are possible in light of the above description.

### LIST OF REFERENCE SIGNS

- 1: First HUD device (first display device)
- 2: Second HUD device (second display device)
- 3: Point lamp (third display device)
- 4: Camera
- 5: Display control device
- 6: Setting unit
- 7: Composite HUD device
- 11,21: Image display unit
- 12, 22: First reflector (convex mirror)
- 13, 23: Second reflector (concave mirror)
- 31: Light source
- 32: Projection lens
- 50: Display controller
- 51: Object detector
- 52: Display rate storage unit
- 53: Priority order storage unit
- 70: Housing
- 71: Liquid crystal panel
- 72: Mask
- 73: LED
- 74: Substrate
- 75: First reflector
- 76: Second reflector
- WS: Windshield
- As: S area
- L: Image light
- I: Virtual image (display image)
- I11 to I13: First image (support image)
- I2: Second image (warning image)
- I31 to I34: Third image (warning image)

## Claims

1. A vehicle display device comprising a head-up display (HUD) device that projects image light of an image, which is to be displayed, on a windshield of a vehicle such that a virtual image of the image is visually recognized by light reflected off the windshield,
wherein the vehicle display device is operable to display a plurality of images having a priority order, and
an image having a high priority order is displayed such that an image displayed in a specified region of the windshield has a predetermined display rate or less.

2. The vehicle display device according to claim 1, wherein the display rate is a ratio of an area of the specified region to an area of the image displayed in the region.

3. The vehicle display device according to claim 1 or 2, wherein the specified region is a region necessary for an occupant to ensure safe traveling of the vehicle.

4. The vehicle display device according to claim 3, wherein
the specified region is substantially an entire region of the windshield in a vehicle width direction in regard to a horizontal direction, and
in regard to a vertical direction, the specified region is a region in which a viewing angle of the occupant of the vehicle is in a range of a depression angle of 1 ° to 5 ° to the horizontal direction.

5. The vehicle display device according to any one of claims 1 to 4, wherein the HUD device includes:
a first HUD device as a first display device that displays a first image freely selected and set; and
a second HUD device as a second display device that displays a preset second image.

6. The vehicle display device according to claim 5, further comprising a third display device that displays a point mark as a third image that indexes an object.

7. The vehicle display device according to claim 6, wherein
the first image is an image used for driving support,
the second image and the third image are images used for warning, and
the second image and the third image are set in a priority order higher than a priority order of the first image.

8. The vehicle display device according to any one of claims 5 to 7, wherein an area of the first image is calculated based on a number of pixels of the first image displayed on an image display surface of the image display unit.

9. The vehicle display device according to any one of claims 5 to 7, wherein the area of the first image is calculated based on individual section areas of a plurality of sections that divides the image display surface of the image display unit.

10. A display method for projecting, on a windshield of a vehicle, image light of an image which is to be displayed, such that a virtual image of the image is visually recognized by light reflected off the windshield,
the display method comprising:
giving a priority order to a plurality of images to be displayed; and
displaying an image having a high priority such that an image displayed in a specified region of the windshield has a predetermined display rate or less.
